# EUROPEAN PATENT APPLICATION

(11) **EP 3 343 444 A1**
(43) Date of publication of application: **04.07.2018**
(21) Application number: 17209120.9
(22) Date of filing: 03.09.2014
(51) Int. Cl.: G06K 9/34, H04N 1/40, G06K 9/38, G06K 9/48

(54) **CHARACTER CORRECTION DEVICE, CHARACTER CORRECTION METHOD, AND PROGRAM**

(30) Priority: 03.09.2013 JP 2013182151
(62) Divisional of application: 14841906.2
(71) Applicant: NEC Corporation, Tokyo 108-8001, (JP)
(72) Inventor: ADACHI, Tadashi, Tokyo, 108-8001 (JP)
(74) Representative: Vossius & Partner Patentanwälte Rechtsanwälte mbB

(57) **Abstract**

Provided is a character correction device with which indistinct areas of written characters are rendered clear. The character correction device is provided with: a character detection unit which detects, from the line width of lines detected in an input image, whether the image is a character; a character-tip detection unit which detects, from among each contour pixel of the lines detected in the input image, contour pixels indicating character tips; and a character correction unit which uses a pixel-value threshold value to binarize pixel values of tip-neighbouring pixels neighbouring the contour pixels indicating the character tips detected by the character-tip detection unit, determines that the tip-neighbouring pixels are pixels configuring the character if the tip-neighbouring pixels are at least the threshold value, and performs character correction.

## Description

### [Technical Field]

The present invention relates to a character correction device, a character correction method, and a program performing a binarizing process.

### [Background Art]

In characters handwritten with a pen or a pencil by a human, the shading or thickness of line segments configuring a character are not uniform but vary. Generally, when a character including such thin or narrow parts is read by a character recognition device performing OCR (Optical Character Recognition), the shape of the character does not correctly recognized due to the existence of the faint part in the character, and a problem that recognition precision decreases occurs. To solve the problem, there is a technique for restoring a faint part in a character (refer to PTL1).

For example, PTL1 describes a technique of detecting tips of line segments constituting a character, selecting a pair of tips which are generated due to a faint part from the detected tips, and connecting the tips to restore the faint part. In this technique, a threshold is provided in advance so that tips which are not generated by a faint part are not connected and, when the distance between tips is equal to or less than the threshold, the tips are recognized as those generated due to the faint part. PTL1 also describes, as a faint-part restoring method, a method of obtaining an average character width of characters to be recognized and connecting tips with a straight line whose line width is the character width.

### [Citation List]

### [Patent Literature]

[PTL 1]: Japanese Unexamined Patent Application Publication No. H06-052356

### [Summary of Invention]

### [Technical Problem]

As a method for restoring a faint part in a character, as well as the method as described in PTL1, a method for locally performing a binarizing process (hereinbelow, local binarizing method) is known. The local binarizing method is a method for changing level of a threshold of binarization so that a predetermined pixel in an image with low contrast such as the faint part in the character and its periphery are distinguished.

In the local binarizing method generally used, usually, an image is divided into some images and then the divided images are binarized. However, when the local binarizing method is simply used for the divided images, parts with low contrast not only the faint part in the character but also a pattern in background and a shaded part are also objects of binarization, and those parts become noise at the time of recognizing the shape of the character. From this reason, there is a problem that only by the local binarizing method, the intended purpose of correctly recognizing the shape of a character by making only the faint part in the character conspicuous by binarization may not be achieved.

An object of the present invention is therefore to provide a character correction device, a character correction method, and a program which solve the above-described problem.

### [Solution to Problem]

The present invention provides a character correction device including: a character detection unit detecting whether an input image is a character based on line width of a line detected in the image; a tip detection unit detecting a contour pixel indicating a tip of the character in contour pixels of the line detected in the input image; and a character correction unit binarizing, a pixel value of a tip adjacent pixel using a threshold, the tip adjacent pixel being adjacent to the contour pixel indicating the tip of the character detected by the tip detection unit, and, when the tip adjacent pixel is equal to or larger than the threshold, determining that the tip adjacent pixel is a pixel as a component of the character to correct the character

The present invention provides a character correction method including: detecting whether an input image is a character based on line width of a line detected in the image; detecting a contour pixel indicating a tip of the character in contour pixels of the line detected in the input image; and binarizing a pixel value of a tip adjacent pixel using a threshold of the pixel value, the tip adjacent pixel being adjacent to the contour pixel indicating the tip of the character detected, and, when the tip adjacent pixel is equal to or larger than the threshold, determining that the tip adjacent pixel is a pixel as a component of the character to correct the character.

The present invention provides a program for making a computer of a character correction device function as: a character detection unit detecting whether an input image is a character based on line width of a line detected in the image; a tip detection unit detecting a contour pixel indicating a tip of the character in contour pixels of the line detected in the input image; and a character correction unit binarizing a pixel value of a tip adjacent pixel using a threshold of the pixel value, the tip adjacent pixel being adjacent to the contour pixel indicating the tip of the character detected by the tip detection unit, and, when the tip adjacent pixel is equal to or larger than the threshold, determining that the tip adjacent pixel is a pixel as a component of the character to correct the character.

### [Advantageous Effects of Invention]

The present invention produces an effect that a faint part in a handwritten character becomes clear.

### [Brief Description of Drawings]

Fig. 1 is a diagram illustrating the minimum configuration of a character correction device in a first exemplary embodiment of the present invention.
Fig. 2 is a diagram illustrating a specific configuration of the character correction device in the first exemplary embodiment of the present invention.
Fig. 3 is a diagram for describing outline of processes of the character correction device in the first exemplary embodiment of the present invention.
Fig. 4 is a first diagram illustrating a process flow of the character correction device in the first exemplary embodiment of the present invention.
Fig. 5 is a diagram illustrating a process of determining an object is a character by the character correction device in the first exemplary embodiment of the present invention.
Fig. 6 is a second diagram illustrating a process flow of the character correction device in the first exemplary embodiment of the present invention.
Fig. 7 is a diagram illustrating a process of detecting the tip of a character by the character correction device in the first exemplary embodiment of the present invention.
Fig. 8 is a third diagram illustrating a process flow of the character correction device in the first exemplary embodiment of the present invention.
Fig. 9 is a diagram illustrating an example of a process result of the character correction device in the first exemplary embodiment of the present invention.

### [Description of Embodiments]

### <First Exemplary Embodiment>

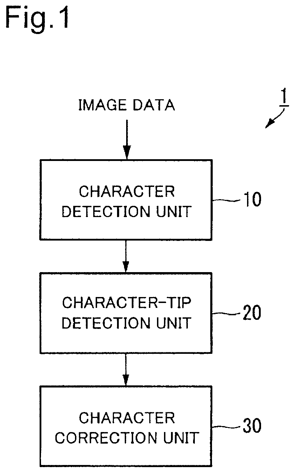

Hereinafter, a character correction device in an exemplary embodiment of the present invention will be described with reference to Figs. 1 to 9.

Fig. 1 is a diagram illustrating the minimum configuration of a character correction device in a first exemplary embodiment. In the diagram, reference numeral 1 indicates a character correction device. As illustrated in Fig. 1, a character correction device 1 includes a character detection unit 10, a tip detection unit 20, and a character correction unit 30.

The character detection unit 10 has the function of inputting image data and detecting whether an image corresponding to the image data indicates a character. The tip detection unit 20 has the function of detecting the tip of a character in the image data which is determined as a character by the character detection unit 10. The character correction unit 30 has the function of correcting a faint part in the character in the vicinity of the tip of the character detected by the tip detection unit 20.

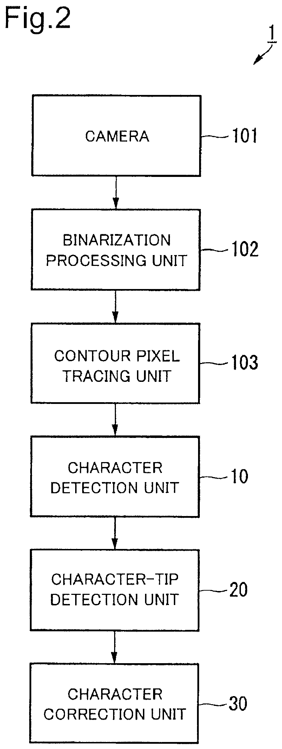

Fig. 2 is a diagram illustrating a specific configuration of the character correction device in the first exemplary embodiment.

As illustrated in Fig. 2, the character correction device 1 includes a camera 101, a binarization processing unit 102, a contour pixel tracing unit 103, the character detection unit 10, the tip detection unit 20, and the character correction unit 30. The camera 101 is an imaging device which captures an image including a character as an object to be recognized. The binarization processing unit 102 has the function of binarizing an image captured by the camera 101 and outputting a result as a simple binarized image. Usually, in the simple binarized image obtained by capturing a character handwritten on a paper sheet by the camera 101, performing the binarizing process on the image captured by the binarization processing unit 102, and outputting the resultant image, black pixels constitute a character and white pixels constitute background. Hereinafter, such a collection of black pixels will be referred to as an "object".

The contour pixel tracing unit 103 has the function of receiving the simple binarized image output from the binarization processing unit 102, tracing pixels constituting the contour line of the object in the binarized image (hereinbelow, contour pixels) one by one in one direction (for example, in the counterclockwise direction) by using a generally-known boundary following method, extracting information of the contour pixels, and outputting the extracted information of the contour pixels.

The character detection unit 10 has the function of detecting character width from the information of the contour pixels and determining whether the object is a character. Specifically, the character detection unit 10 has the function of checking whether each point of the contour pixels is a part of the contour pixels constructing a width of an object which seems to be a character with another point and, when at least predetermined number of points constituting such width exists in the contour pixels, determining whether the object is a character. Handwritten characters are generally written by using a pencil or a pen which is commercially available, and the width of the character written by using those writing tools lies within a predetermined range. In the exemplary embodiment, the character detection unit 10 focuses on such characteristics and the characteristics are used for determination whether an object is a character.

The tip detection unit 20 has the function of focusing on a change in a contour tracing direction when the contour line of an object is traced in one direction using a certain point on the contour pixels as a start point from information of the contour pixels, when the contour following direction changes by predetermined angle or larger, estimating the tip of a character exists in the vicinity of pixels along the contour following direction, and detecting the tip of the character. Specifically, the tip detection unit 20 checks whether there is a part where the travel direction at the time of following the contour pixels turns by 180 degrees or larger in the object determined as a character by the character detection unit 10. When there is such a part, the tip detection unit 20 estimates that there is a tip in the vicinity of the pixels along the contour following direction and further performs a process of determining whether the part is the tip of a character. When the tip of a character is detected, the tip detection unit 20 outputs information indicating pixels around the tip.

The character correction unit 30 has the function of performing a binarizing process for pixels around the tip of a character in the simple binarized image. The character correction unit 30 adjusts the threshold of binarization so that, by performing binarization, a background pixel adjacent to a pixel as a component of the tip of the character becomes an object, not background, and performs the binarizing process again. By the above, an effect that only the tip of the character is extended according to density of the pixels around the tip is obtained.

When those processes are repeated, the line segments in the character which are disconnected in the faint part are connected, and the character is restored.

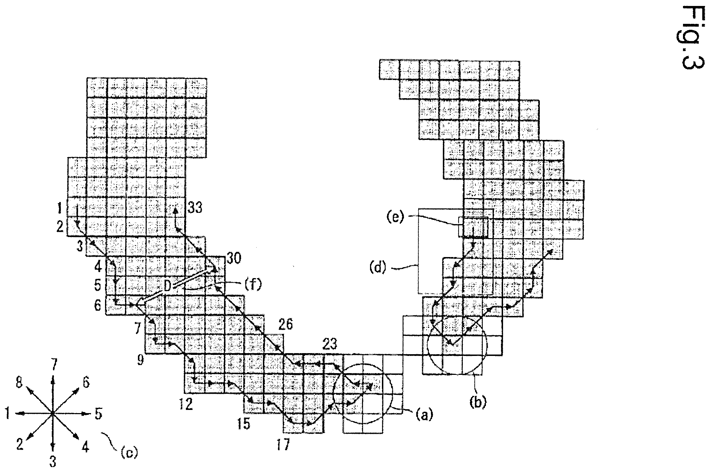

Fig. 3 is a diagram for describing outline of processes of the character correction device in the first exemplary embodiment.

Fig. 3 illustrates a part of a character which is disconnected only by simply performing binarization in the faint part. The areas indicated by circles (a) and (b) in Fig. 3 are tip parts in a character which are generated due to the faint part in the character. In the exemplary embodiment, by detecting such tip parts in the character and binarizing the periphery based on a proper threshold, the faint part in the character is highlighted and the character is restored.
(c) in Fig. 3 is a diagram for describing an 8-direction chain code. The 8-direction chain code is a method for indicating a connection of two adjacent contour pixels by vectors in eight directions of up, down, left, right, upper right, lower right, upper left, and lower left. For example, it is assumed that numbers are associated with the eight directions as illustrated in (c) in Fig. 3. In the case of tracing the contour of the object in the region indicated by (d) in Fig. 3 using the pixel in (e) in Fig. 3 as the start point in the arrow directions illustrated in the diagram, the contour can be traced in the directions of 3, 2, 3 ... Since the chain code indicates the positional relation of adjacent pixels by a direction, the curve and the direction of a line segment can be recognized by using information on the chain code.

In the exemplary embodiment, the numbers assigned to the contour pixels of the character illustrated in Fig. 3 will be referred to as sequence numbers. The sequence numbers are numbers assigned by being added one by one in order of tracing the contour pixels when the contour pixels are traced by using a general contour tracing method from a certain point of the contour pixel as the start point. The sequence numbers are used for determination of whether an object is a character and detection of the tip part of a character, and a contour pixel assigned with sequence number "i" is described as Si.

D indicated in (f) in Fig. 3 denotes Euclidean distance between contour pixels S7 and S30. Distance Di-j between a contour pixel Si and a contour pixel Sj is obtained, when coordinates of Si and Sj are described as (Xi, Yi) and (Xj, Yj), respectively, as square root of (Xj-Xi)² + (Yj-Yi)².

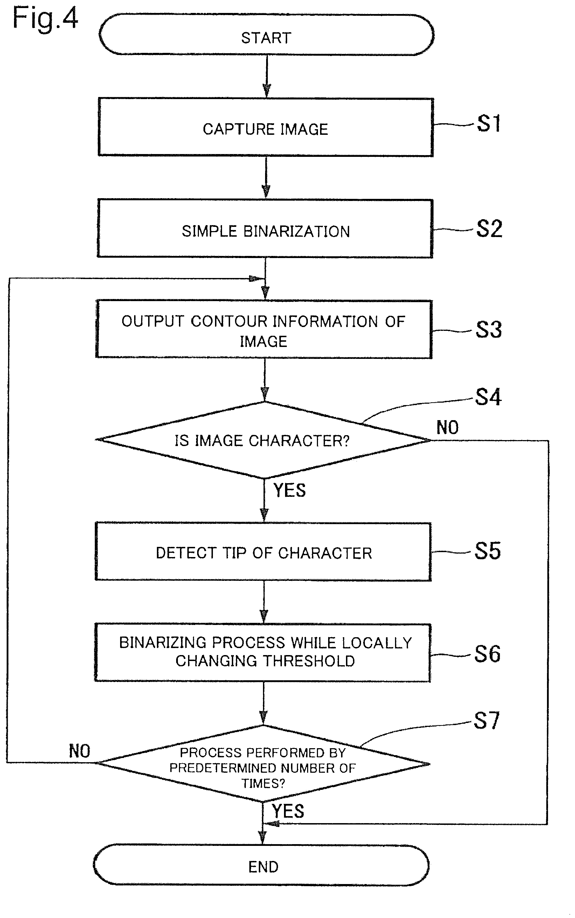

Fig. 4 is a first diagram illustrating a process flow of the character correction device in the exemplary embodiment.

Using the process flow of Fig. 4, a process of correcting a faint part in a character by the character correction device 1 will be described.

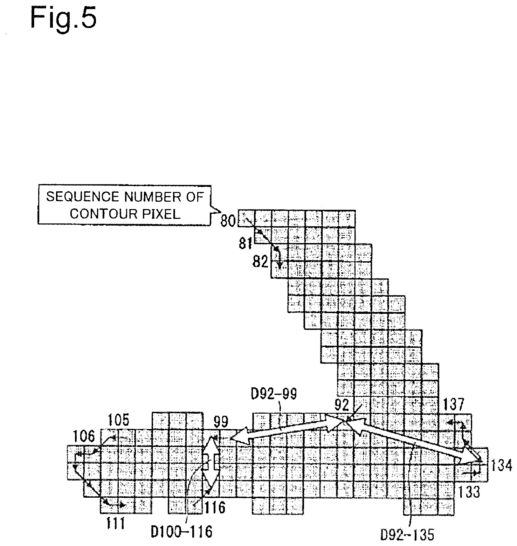

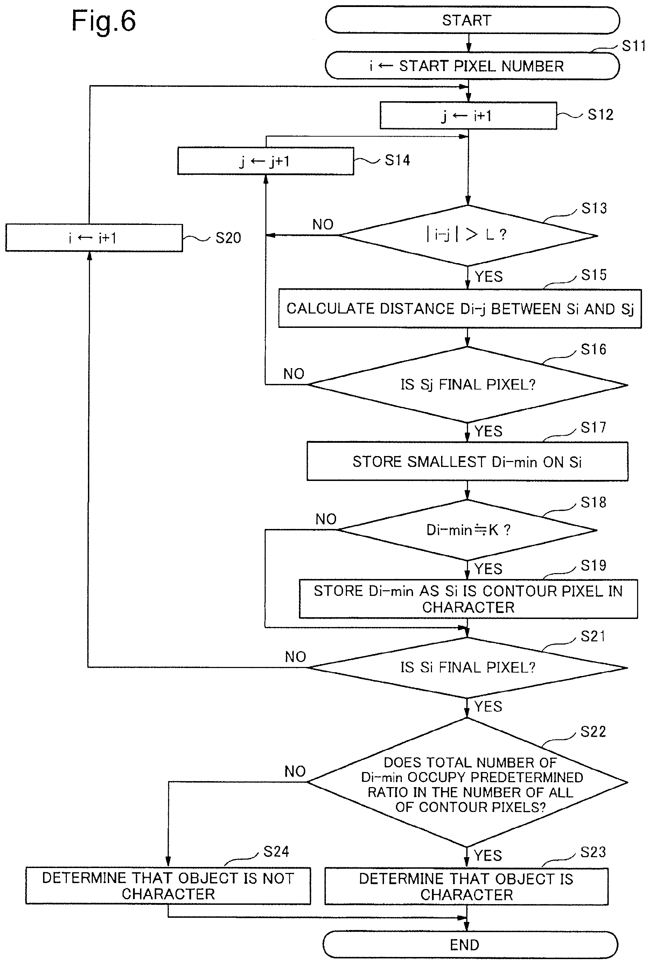

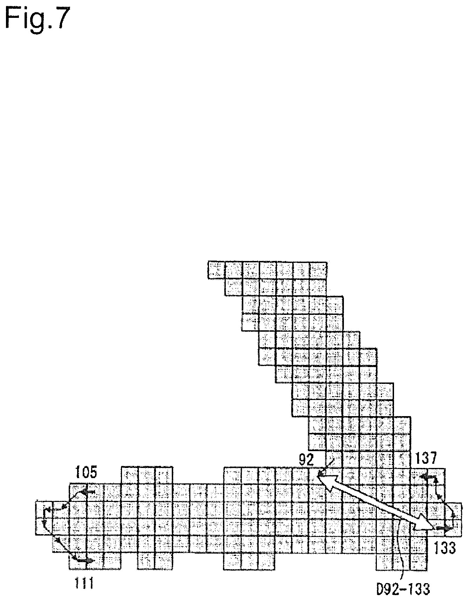

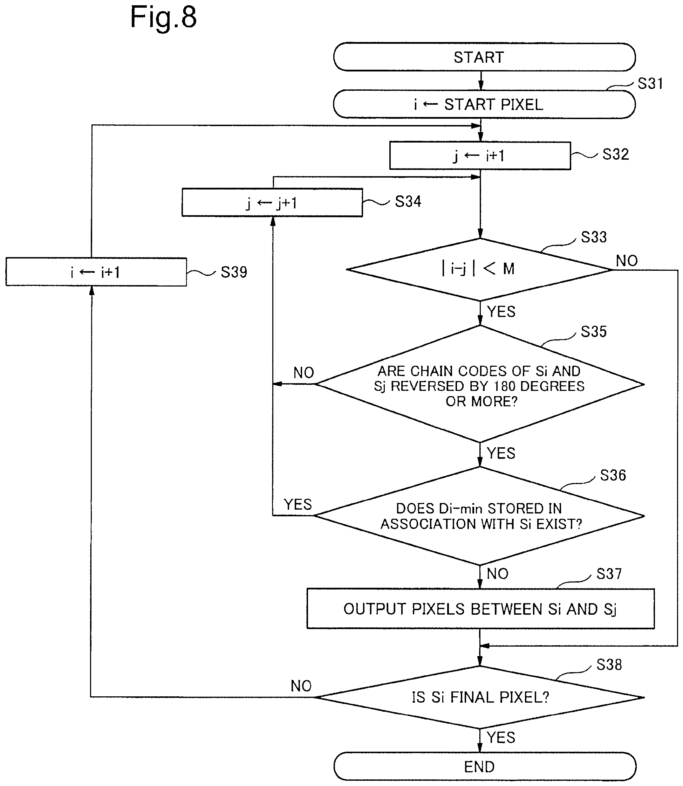

First, the camera 101 captures an image to be corrected and outputs the captured image to the binarization processing unit 102 (step S1). The binarization processing unit 102 binarizes the input image and outputs a simple binarized image (step S2). The contour pixel tracing unit 103 receives the simple binarized image and outputs information of contour pixels of an object (step S3). The information of the contour pixels is information that a set of a chain code, sequence number, and coordinates of each of pixels using a predetermined position in an image as the origin is held for each of pixels constituting the contour pixels. The character detection unit 10 receives the information of the contour pixels and determines whether the object is a character (step S4). The method for determining whether an object is a character will be described later with reference to Figs. 5 and 6. When the character detection unit 10 determines that the object is not a character, the character detection unit 10 finishes the process flow. When the character detection unit 10 recognizes that the object is a character, the tip detection unit 20 receives the information of the contour pixels, detects the tip of the character (step S5), and outputs pixel information of the tip of the character. The method for detecting the tip of a character will be described later with reference to Figs. 7 and 8.

The character correction unit 30 receives pixel information of the tip of the character and performs again the binarizing process on the image output in step S1. The character correction unit 30 specifies pixels adjacent to the tip of a character based on the input pixel information and, for the tip adjacent pixels, performs a binarizing process determining whether the tip adjacent pixels are a character or background by using a threshold lower than the threshold of binarization used in step S2 (step S6). That is, the character correction unit 30 performs the binarizing process while locally changing the threshold also on a pixel which is adjacent to the tip of a character and is recognized as a background image not an object in the binarization of step S2, so that the pixel is recognized as an object. The tip adjacent pixel may be not only pixels in direct contact with the pixels constructing the tip of a character in a simple binarized image but also pixels adjacent to them. The character correction unit 30 outputs a corrected binarized image as a result of performing the process. As a result of the process, an effect that the tip part of a character extends according to a pixel value (density of a pixel) is obtained.

The character correcting process is performed once as described above. However, even the local binarization correction is performed only once, a sufficient effect is not always obtained. In the exemplary embodiment, the processes from step S3 are repeatedly performed. The reason why the processes are repeated from step S3 is that, by performing step S6, the tip is extended and the contour of the character is changed.

That is, the character correction unit 30 determines whether the character correction using the local binarization in step S6 was repeated by predetermined number of times (step S7). When the correction was not performed by the predetermined number of times, the contour pixel tracing unit 103 receives the corrected binarized image and performs the process of step S3. When the character correction using the local binarization was performed only by the predetermined number of times, the character correction unit 30 finishes the process flow.

Fig. 5 is a diagram illustrating a process of determining whether an object is a character by the character correction device in the first exemplary embodiment.

The method for determining whether an object is a character by the character detection unit 10 in above-described step S4 will be described in more detail with reference to Fig. 5.

First, a method for measuring line width of an object will be described. As described above, the contour pixel tracing unit 103 traces contour pixels of the binarized image and assigns sequence numbers to the contour pixels in order along the trace. In Fig. 5, 80, 81, 82,... are the sequence numbers. It is now assumed that the sequence number of a certain pixel is set as "i" and that of another pixel after "i" is set as "j", regardless of the distance between the pixel Si and the pixel Sj, when j-i is small, it can be said that the pixels are close to each other in the order of the contour pixels. On the contrary, when j-i is large, it can be said that the pixels are far from each other in the order of the contour pixels. In this case, the following rules are applied. A threshold for determining whether the absolute value of the difference between sequence numbers (hereinbelow, called order distance) is large or small is described as L.

### <Rule 1>

When j-i≤L, the distance on the contour line between the pixels Si and Sj is close, and the distance between the pixels does not indicate line width of a character. Therefore, the distance Di-j is not measured.

### <Rule 2>

When j-i>L, the distance on the contour line between the pixels Si and Sj is far, and there is the possibility that the distance between the pixels indicates line width of a character. Therefore, the distance Di-j is measured.

When it is assumed that L = 10, in the case where i = 92 and j = 99, 99-92≤10, and the distance D92-99 in Fig. 5 is not measured. When i = 92 and j = 135, 135-92>10, and the distance D92-135 in Fig. 5 is measured. Although the distance on a contour along contour pixels is set as the above-described order distance in the exemplary embodiment, the present invention is not limited to the case.

In the case of further measuring a distance, whether the distance corresponds to the line width of a character is determined. Namely, since the line width of a commercially-available pen or the like used for a handwriting character lies within a specific range K, when the minimum value of the line width of a character is set as K1 and the maximum value is set as K2, the following determination is made.

### <Determination 1>

In the case where the distance Di-j>K2 or distance Di-j<K1, the pixel Si is determined as a part of contour pixels of a large or small binarized object not within the character size, that is, determined that it is not a target of character recognition.

### <Determination 2>

In the case where K1≤ distance Di-j ≤ K2, the distance Di-j corresponds to the line width of a character, and the pixel Si is determined as a part of the contour pixels of a character.

Next, a method for determining whether an object is a character by the character detection unit 10 based on the above-described determination criteria will be described. The character detection unit 10 obtains the distance Di-j between a certain contour pixel Si and each of a plurality of contour pixels Sj satisfying the condition of the rule 2. The character detection unit 10 extracts the minimum distance Di-min in the distances Di-j and, when the distance Di-min corresponds to the determination 2, stores the distance Di-min in a memory or the like so as to be associated with the contour pixel Si. When at least a certain percentage of the contour pixels Si whose distance Di-min is stored in the memory or the like exists in all of the contour pixels as a result of performing the process on all of the contour pixels while shifting the contour pixel Si as a target, the character detection unit 10 determines that the object is a character.

Fig. 6 is a second diagram illustrating the process flow of the character correction device in the exemplary embodiment.

The processes described with reference to Fig. 5 will be described by using the flowchart of Fig. 6.

"i" and "j" indicate sequence numbers assigned to contour pixels.

The character detection unit 10 sets an initial value of the sequence number to "i" (step S11). The character detection unit 10 sets "i+1" as "j" (step S12). At this time point, Si and Sj indicate adjacent pixels.

The character detection unit 10 obtains the order distance between "i" and "j" and compares the threshold L for determining whether the order distance of a predetermined sequence number is large or small with the order distance (step S13). When the order distance is equal to or less than L, the character detection unit 10 adds 1 to "j" (step S14) and performs the same determination again. That is, a pixel to be noted (as a target) moves to the next pixel. On the other hand, when the order distance between "i" and "j" is larger than L, the character detection unit 10 calculates the distance Di-j between Si and Sj and stores the result into the memory (step S15). The character detection unit 10 determines whether Sj is the final pixel (step S16). The final pixel is the contour pixel when the noted pixel Sj makes a circuit of the object and returns to the pixel far from Si only by the threshold L. Since the contour pixel tracing unit 103 obtains information of the contour pixels in advance, the character detection unit 10 can obtain the final pixel. When Sj is not the final pixel, the character detection unit 10 adds 1 to "j" (step S14) and repeatedly performs the process from step S13. When Sj is the final pixel, the character detection unit 10 obtains the minimum value Di-min from the distances Di-j for all of "j" stored in the memory with respect to Si and stores the obtained distance Di-min into the memory (step S17). Subsequently, the character detection unit 10 determines whether the distance Di-min lies within the limit range K of the line width of a handwritten character (step S18). When the distance Di-min lies in the limit range K, the character detection unit 10 determines that the pixel Si is a part of the contour pixels of a character and stores the distance Di-min associated with Si into a memory or table (step S19).

When the above processes are finished on Si, the character detection unit 10 increases the sequence number by one, advances Si to the next pixel, and performs similar processes. The character detection unit 10 repeats the process until Si makes a circuit in the object. Specifically, when the distance Di-min does not lie in the limit range K in step S18 or after the distance Di-min is stored into the memory in step S19, the character detection unit 10 determines whether Si is the final pixel (step S21). The final pixel herein is a contour pixel in a state where the contour pixel Si as a reference of the process makes a circuit in the object and becomes adjacent to the pixel which was Si in the step S11 in the process flow. When Si is not the final pixel, the character detection unit 10 adds 1 to "i" (step S20), advances Si to the next pixel, and repeats the process from step S12. When Si is the final pixel, the character detection unit 10 calculates the ratio that the total number of the pixels Si whose distance Di-min is stored in the memory or the like occupies in the number of all of contour pixels and compares the calculated ratio with a predetermined ratio (step S22). The value of the predetermined ratio is stored in a memory or the like. The character detection unit 10 reads the value from the memory or the like and performs the comparison of step S22. When the total number of pixels Si whose distance Di-min is stored exists at the predetermined ratio or more, the character detection unit 10 determines that the object is a character (step S23). On the other hand, when the total number of pixels Si whose distance Di-min is stored is less than the predetermined ratio, the character detection unit 10 determines that the object is not a character (step S24). After that, the character detection unit 10 finishes the process flow.

Fig. 7 is a diagram illustrating a process of detecting the tip of a character by the character correction device in the first exemplary embodiment.

Referring to Fig. 7, the method for detecting the tip of a character by the tip detection unit 20 in the above-described step S5 will be described in more detail.

The tip detection unit 20 checks whether a pixel Sj whose chain code is reversed by 180 degrees or more from the chain code of the pixel Si exists between the contour pixel Si and the contour pixel Sj which lies in a predetermined interval and, when the chain code is reversed by 180 degrees or more, estimates that the tip of a character exists between Si and Sj. When the contour pixel Sj lies in the predetermined interval, the order distance between the pixels Si and Sj is equal to or less than the threshold M.

To increase precision of the detection, a check is made to see whether Si has line width with another pixel. For example, at a corner of a character, there is a case that the chain code is reversed more than 180 degrees between specific pixels. Only by the determination according to a change in the chain codes, it cannot be discriminated that the pixel Si is the tip of a character generated due to a faint part in the character or an end point formed according to the form of the character. Consequently, when the pixel Si has the distance Di-min which is recognized as the line width of a character as described with reference to Fig. 5, the pixel Si is considered as a part of pixels forming a line segment having a width which seems to be a character and it is determined that the contour pixels between the pixels Si and Sj is not a tip of a character.

In the case of the example of Fig. 7, the chain code of S133 is "5" in (c) in Fig. 3, the chain code of S137 is "1", and the chain code is reversed by 180 degrees between the pixels. Further it is assumed that the order distance between S133 and S137 satisfies j-i<M. However, even in such a case, when the distance D92-133 corresponds to the determination 2 in the description of Fig. 5, that is, when the distance D133-min of the pixel S133 is stored in a memory or the like, it is determined that the contour pixels existing between S133 and S137 are not the tip of a character.

Fig. 8 is a third diagram illustrating the process flow of the character correction device in the exemplary embodiment.

The process described with reference to Fig. 7 will be described by using the flowchart of Fig. 8.

The process flow is executed when the character detection unit 10 determines that the object is a character. "i" and "j" indicate sequence numbers assigned to the contour pixels.

First, the tip detection unit 20 sets the initial value of the sequence number as "i" (step S31). Next, the tip detection unit 20 sets i+1 as "j" (step S32). The tip detection unit 20 obtains the order distance between "i" and "j" and compares the obtained order distance with the predetermined threshold M (step S33). The threshold M is a value, at the time of making a search whether the tip of a character exists between the pixel Si and the pixel Sj whose order distance of the sequence number is not so far, to specify the search range. Therefore, when the order distance between "i" and "j" is equal to or larger than M, the tip detection unit 20 does not perform a further process on Si. When the order distance is smaller than M, the tip detection unit 20 determines whether the chain code of Si and the chain code of Sj are reversed by 180 degrees or more (step S35). The chain codes and information necessary to recognize the angle between chain codes are stored in a table or the like. By reading the information, the angle formed by two chain codes can be determined. When there is no change equal to or larger than 180 degrees in the direction of a chain code, the tip detection unit 20 adds 1 to "j" (step S34) and repeats the process from step S33. When there is a change of 180 degrees or larger in the direction of a chain code, the tip detection unit 20 determines whether the distance Di-min associated with the pixel Si is stored in a memory or table (step S36). When the distance Di-min associated with the pixel Si is stored in a memory or the like, the tip detection unit 20 adds 1 to "j" (step S34) and repeats the process from step S33. When the distance Di-min associated with the pixel Si is not stored in a memory or the like, the tip detection unit 20 determines that the tip of a character exists between the pixels Si and Sj and outputs pixel information (coordinates) from Si to Sj (step S37). Based on the output pixel information, the character correction unit 30 performs a process of binarizing only the tip of a character in the above-described step S6.

When the above process is finished on Si, the tip detection unit 20 advances Si to the next pixel and performs a similar process. The tip detection unit 20 repeats the process until Si makes a circuit in the object. Specifically, when the order distance between "i" and "j" is equal to or larger than M in step S33, or after pixel information of the tip of a character is output in step S37, the tip detection unit 20 determines whether Si is the final pixel (step S38). The final pixel is a contour pixel when the contour pixel Si as a criterion of the process makes a circuit in the object and becomes adjacent to the pixel which was the pixel Si in step S31 in the process flow. When Si is not the final pixel, the tip detection unit 20 adds 1 to "i" (step S39) and repeats the process from step S32. On the other hand, when Si is the final pixel, the tip detection unit 20 finishes the process flow.

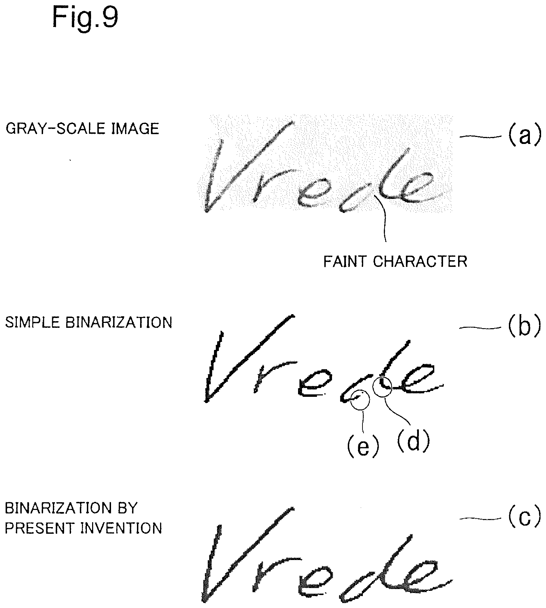

Fig. 9 is a diagram illustrating an example of a process result of the character correction device in the first exemplary embodiment.

An image (a) in Fig. 9 is the image captured by the camera 101. An image (b) in Fig. 9 is a simple binarized image as a result of processing the image (a) by the binarization processing unit 102. An image (c) in Fig. 9 is an image of a result of processing the image (b) by the character correction unit 30. From the image (b), characters can be also read as "Vrecle". However, from the image (c), the characters can be recognized as "Vrede". As illustrated in Fig. 9, the character correction device 1 of the exemplary embodiment can restore a faint part in a handwritten character in accordance with handwriting. Correction of image data in the exemplary embodiment is effective to improve the character recognition ratio using the OCR.

In the case of this example, when the method of PTL1 is used, although the region indicated by the circle (e) in Fig. 9 may be recognized as a tip of a character, the region indicated by the circle (d) in Fig. 9 may not be recognized as a tip of a character. In this case, the effect of correcting the faint character by connecting the region indicated by the circle (d) in Fig. 9 and the region indicated by the circle (e) in Fig. 9 cannot be obtained. Therefore, when the characters corrected by the method of PTL1 are read by a character recognition device, there is the possibility that they are recognized as "Vrecle". In the exemplary embodiment, however, the processes are repeated that the region indicated by the circle (e) in Fig. 9 is recognized as a tip of a character, as illustrated in the example, the level of the threshold is lowered so that density of pixels adjacent to the tip becomes equal to or higher than the threshold, the local binarizing process is performed, tips of characters in a simple binarized image obtained as a result of the process are recognized again, and the local binarizing process is performed again also on pixels adjacent to a newly recognized tip. As a result, the tip of the character indicated by the circle (e) in Fig. 9, which is generated due to the faint part, can be extended so as to be connected to the line segment of the character indicated by the circle (d) in Fig. 9. In such a manner, when the characters corrected according to the exemplary embodiment are read, the read characters can be recognized as "Vrede".

As described above, the exemplary embodiment produces an effect that a faint part in a character which cannot be corrected by the background art can be restored.

The above-described character correction device 1 has a computer therein. The procedure of each of the processes of the above-described character correction device 1 is stored in the form of a program in a computer-readable recording medium. The program is read and executed by the computer, thereby performing the processes. The computer-readable recording medium is a magnetic disc, a magneto-optical disc, a CD (Compact Disc)-ROM (Read Only Memory), a DVD (Digital Versatile Disc)-ROM, a semiconductor memory, or the like. The computer program may be distributed to a computer by using a communication line and executed by the computer to which the program is distributed.

The program may be for implementing a part of the above-described functions. Further, the program may be a program, a so-called differential file (differential program), which can implement the above-described functions by combination with a program already recorded in a computer system.

Although the exemplary embodiment of the present invention has been described specifically above with reference to the drawings, the specific configuration is not limited to the exemplary embodiment, and design and the like in a range which does not depart from the gist of the present invention are also included.

The present application claims priority based on Japanese Patent Application No. 2013-182151 filed in Japan on September 3, 2013 and its description is incorporated herein by reference.

### [Industrial Applicability]

The present invention can be applied to, for example, recognition of a handwritten character. The present invention produces an effect that a faint part in a handwritten character becomes clear.

The present invention also relates to the following items:
1. A character correction device comprising:
   a character detection unit detecting whether an input image is a character based on line width of a line detected in the image;
   a tip detection unit detecting a contour pixel indicating a tip of the character in contour pixels of the line detected in the input image; and
   a character correction unit binarizing, a pixel value of a tip adjacent pixel using a threshold, the tip adjacent pixel being adjacent to the contour pixel indicating the tip of the character detected by the tip detection unit, and, when the tip adjacent pixel is equal to or larger than the threshold, determining that the tip adjacent pixel is a pixel as a component of the character to correct the character.
2. The character correction device according to item 1, wherein the character detection unit determines that the image is a character when sets of two pixels exist in at least predetermined ratio which is necessary to determine that the image is the character, to total number of the contour pixels, the sets of two pixels existing with an interval larger than a distance which can be recognized as line width of the character on a contour along the contour pixels and constituting the contour pixels, and a distance between the two pixels being in a predetermined range indicating line width of a character
3. The character correction device according to item 1 or 2, wherein the tip detection unit specifies two pixels within a predetermined interval in the contour pixels, determines whether an angle formed by tracing directions in the specified two pixels in a case of tracing the contour of the line configured by the contour pixels in one direction changes by a predetermined angle or larger and, when the angle formed by the tracing directions changes by the predetermined angle or larger and distance between a pixel as start point of tracing the contour as one of the specified two pixels and another pixel as the contour pixel existing with an interval larger than distance recognized as line width of the character in the contour along the contour pixels does not lie in a predetermined range indicating the line width of a character, determines that adjacent pixels between the specified two pixels as the tip adjacent pixels.
4. The character correction device according to any one of items 1 to 3, wherein the character correction unit repeats a process of determining that the tip adjacent pixel is a pixel as a component of the character predetermined number of times while decreasing the threshold, and corrects the character.
5. A character correction method comprising:
   detecting whether an input image is a character based on line width of a line detected in the image;
   detecting a contour pixel indicating a tip of the character in contour pixels of the line detected in the input image; and
   binarizing a pixel value of a tip adjacent pixel using a threshold of the pixel value, the tip adjacent pixel being adjacent to the contour pixel indicating the tip of the character detected, and, when the tip adjacent pixel is equal to or larger than the threshold, determining that the tip adjacent pixel is a pixel as a component of the character to correct the character.
6. A program for making a computer of a character correction device function as:
   a character detection unit detecting whether an input image is a character based on line width of a line detected in the image;
   a tip detection unit detecting a contour pixel indicating a tip of the character in contour pixels of the line detected in the input image; and
   a character correction unit binarizing a pixel value of a tip adjacent pixel using a threshold of the pixel value, the tip adjacent pixel being adjacent to the contour pixel indicating the tip of the character detected by the tip detection unit, and, when the tip adjacent pixel is equal to or larger than the threshold, determining that the tip adjacent pixel is a pixel as a component of the character to correct the character.

### [Reference signs List]

- 1: Character correction device
- 10: Character detection unit
- 101: Camera
- 102: Binarization processing unit
- 103: Contour pixel tracing unit
- 20: Tip detection unit
- 30: Character correction unit

## Claims

1. The character correction device comprising:
a character detection unit detecting whether an input image is a character based on line width of a line detected in the image;
a tip detection unit detecting a contour pixel indicating a tip of the character in contour pixels of the line detected in the input image; and
a character correction unit binarizing, a pixel value of a tip adjacent pixel using a threshold, the tip adjacent pixel being adjacent to the contour pixel indicating the tip of the character detected by the tip detection unit, and, when the tip adjacent pixel is equal to or larger than the threshold, determining that the tip adjacent pixel is a pixel as a component of the character to correct the character,
wherein the tip detection unit is specifying two pixels within a predetermined interval in the contour pixels, and determining whether an angle formed by tracing directions in the specified two pixels in a case of tracing the contour of the line configured by the contour pixels in one direction changes by a predetermined angle or larger and, when the angle formed by the tracing directions changes by the predetermined angle or larger and distance between a pixel as start point of tracing the contour as one of the specified two pixels and another pixel as the contour pixel existing with an interval larger than distance recognized as line width of the character in the contour along the contour pixels does not lie in a predetermined range indicating the line width of a character, determining that adjacent pixels between the specified two pixels as the tip adjacent pixels.

2. The character correction device according to claim 1, wherein the character detection unit determines that the image is a character when sets of two pixels exist in at least predetermined ratio which is necessary to determine that the image is the character, to total number of the contour pixels, the sets of two pixels existing with an interval larger than a distance which can be recognized as line width of the character on a contour along the contour pixels and constituting the contour pixels, and a distance between the two pixels being in a predetermined range indicating line width of a character

3. The character correction device according to any one of claims 1 or 2, wherein the character correction unit repeats a process of determining that the tip adjacent pixel is a pixel as a component of the character predetermined number of times while decreasing the threshold, and corrects the character.

4. A character correction method comprising:
detecting whether an input image is a character based on line width of a line detected in the image;
detecting a contour pixel indicating a tip of the character in contour pixels of the line detected in the input image; and
binarizing a pixel value of a tip adjacent pixel using a threshold of the pixel value, the tip adjacent pixel being adjacent to the contour pixel indicating the tip of the character detected, and, when the tip adjacent pixel is equal to or larger than the threshold, determining that the tip adjacent pixel is a pixel as a component of the character to correct the character;
wherein detecting a contour pixel comprises
specifying two pixels within a predetermined interval in the contour pixels; determining whether an angle formed by tracing directions in the specified two pixels in a case of tracing the contour of the line configured by the contour pixels in one direction changes by a predetermined angle or larger and, when the angle formed by the tracing directions changes by the predetermined angle or larger and distance between a pixel as start point of tracing the contour as one of the specified two pixels and another pixel as the contour pixel existing with an interval larger than distance recognized as line width of the character in the contour along the contour pixels does not lie in a predetermined range indicating the line width of a character, determining that adjacent pixels between the specified two pixels as the tip adjacent pixels.

5. A program for making a computer of a character correction device function as:
a character detection unit detecting whether an input image is a character based on line width of a line detected in the image;
a tip detection unit detecting a contour pixel indicating a tip of the character in contour pixels of the line detected in the input image; and
a character correction unit binarizing a pixel value of a tip adjacent pixel using a threshold of the pixel value, the tip adjacent pixel being adjacent to the contour pixel indicating the tip of the character detected by the tip detection unit, and, when the tip adjacent pixel is equal to or larger than the threshold, determining that the tip adjacent pixel is a pixel as a component of the character to correct the character; and
wherein the tip detection unit specifies two pixels within a predetermined interval in the contour pixels, determines whether an angle formed by tracing directions in the specified two pixels in a case of tracing the contour of the line configured by the contour pixels in one direction changes by a predetermined angle or larger and, when the angle formed by the tracing directions changes by the predetermined angle or larger and distance between a pixel as start point of tracing the contour as one of the specified two pixels and another pixel as the contour pixel existing with an interval larger than distance recognized as line width of the character in the contour along the contour pixels does not lie in a predetermined range indicating the line width of a character, determines that adjacent pixels between the specified two pixels as the tip adjacent pixels.
